# EUROPÄISCHE PATENTSCHRIFT

(11) **EP 0 259 638 B1**
(45) Veröffentlichungstag und Bekanntmachung des Hinweises auf die Patenterteilung: **31.03.1993**
(21) Anmeldenummer: 87111652.1
(22) Anmeldetag: 12.08.1987
(51) Int. Cl.: C08G 85/00, B01J 19/22

(54) **Verfahren zur Vereinheitlichtung der Streuung der B-Zeit von Duroplasten**
Process for standardizing the B-stage reaction of Duroplasts
Procédé pour régulariser la réaction des duroplastes à l'état B

(30) Priorität: 11.09.1986 DE 3630928
(43) Veröffentlichungstag der Anmeldung: 16.03.1988
(73) Patentinhaber: MESSER GRIESHEIM GMBH, D-60314 Frankfurt (DE)
(72) Erfinder: Schlömer, Franz Robert, D-4047 Dormagen 11 (DE); Volker, Wolfgang, D-4154 Tönisvorst 1 (DE); Hupfer, Hartwig, D-2072 Bargteheide (DE); Ott, Karl-Erich, D-2000 Hamburg 70 (DE); Müller, Bodo, D-2100 Hamburg 90 (DE)

(56) Entgegenhaltungen:
- CH-A- 500 059
- US-A- 3 174 295
- CHEMICAL ABSTRACTS, Band 88, Nr. 20, 15. Mai 1978, Zusammenfassung Nr. 137559a, Columbus, Ohio, US; && JP-A-77 133 360 (MATSUSHITA ELECTRIC WORKS, LTD) 30-04-1976
- PATENT ABSTRACTS OF JAPAN, Band 7, Nr. 122 (C-168)[1267], 26. Mai 1983, Seite 134 C 168; & JP-A-58 42 677 (SHOWA DENKO K.K.) 12-03-1983
- PATENT ABSTRACTS OF JAPAN, Band 5, Nr. 28 (C-44)[700], 20. Februar 1981, Seite 40 C 44; & JP-A-55 152 764 (TOA GOSEI KAGAKU KOGYO K.K.) 28-11-1980

## Beschreibung

Die Erfindung betrifft ein Verfahren zur Vereinheitlichung der Streuung der B-Zeit von Duroplasten nach dem Oberbegriff des Anspruches 1.

Hochreaktive Polykondensate, insbesondere Duroplaste, werden diskontinuierlich in Reaktoren hergestellt. Nach dem Auspressen aus den Reaktoren werden die Kunstharze mit Wasser abgekühlt, um bestimmte geforderte und gewünschte Produktqualitäten bezüglich der physikalischen Kennwerte des Kunstharzes zu erhalten. Durch die Kühlung mit Wasser wird die weitere Reaktion des Kunstharzes abgebrochen. Praktisch verfährt man dabei so, daß man das aus dem Reaktor ausgetretene Kunstharz in großen Pfannen auffängt und mit Kühlwasser bedeckt. Nach dem Erkalten wird das Wasser abgelassen und das Harz manuell ausgebrochen. Danach wird es getrocknet und gemahlen. Es kann auch indirekt mit Wasser gekühlt werden, wie z.B. aus CH-A-500 059 bekannt.

Das gemahlene Kunstharz ist zwar hart und spröde, aber noch nicht endgültig ausgehärtet. Bei einer erneuten Temperaturerhöhung wird es für eine kurze Zeit wieder weich und fließfähig, bevor es endgültig und irreversibel aushärtet. Man verwendet derartige Kunstharze daher als Bindemittel für Preßmassen. Beschichtungen und andere technische Artikel, beispielsweise Bremsbeläge. Als Härtungscharakteristik für Duroplaste dient die B-Zeit. Sie sagt aus, nach welcher Reaktionszeit ein Duroplast bei einer bestimmten Temperatur unter den jeweiligen Versuchsbedingungen in den B-Zustand (siehe DIN 16916 T1) übergeht. Diese B-Zeit ist zwar sehr kurz, aber keine von vornherein festlegbare Konstante. Sie streut nämlich selbst innerhalb einer Charge um rund 2 Min. Für die Weiterverarbeitung in Preßmassen ist ein Kunstharz mit geringer Streuung der B-Zeit von Vorteil, da ein gleichmäßiges Aushärten zu qualitativ höherwertigen Produkten führt.

Der Erfindung liegt daher die Aufgabe zugrunde, ein Verfahren zur Vereinheitlichung der Streuung der B-Zeit von Duroplasten zu schaffen, bei dem die Duroplaste diskontinuierlich in einem Reaktor hergestellt, aus diesem ausgepreßt, durch ein Kühlmittel zur Erstarrung gebracht, gebrochen und gemahlen werden. Nach der Erfindung wird dies erreicht, indem die Abkühlung mit einem tiefsiedenden verflüssigten Gas durchgeführt wird.

Vorteilhafte Weiterbildungen der Erfindung sind in den Unteransprüchen angegeben.

Die Anwendung von tiefsiedenden verflüssigten Gasen, insbesondere Stickstoff, als Kühlmittel, um Polyester zur Erstarrung zu bringen und weiterverarbeiten zu können, ist aus Chemical Abstracts, Band 88, 15.5.78, Nr. 137 559a und Patent Abstracts of Japan, Band 5, Nr. 28 (C-44) [700], 20.Februar 1981, Seite 40 C 44; JP-A-55 152 764 bekannt. Ein Zusammenhang mit der Aufgabe, bei Duroplasten eine Vereinheitlichung der Streuung der B-Zeit zu erreichen, besteht nicht.

Die Ursache für die Qualitätsverbesserung von Kunstharzen, die nach dem erfindungsgemäßen Verfahren hergestellt sind, wird darin gesehen, daß infolge der schnelleren Abkühlung durch ein tiefsiedendes verflüssigtes Gas gegenüber der Abkühlung durch Wasser gleichmäßigere Molekülgrößen erhalten werden. Diese bewirken eine gleichmäßigere Aushärtzeit über die gesamte Charge. Bei Kunstharzen, die gemäß der Erfindung mit flüssigem Stickstoff gekühlt werden, ergibt sich beispielsweise eine Streuung der B-Zeit über die gesamte Charge von weniger als 1 Min. In Versuchen wurden bereits Werte von 12 sec erreicht.

Gegenüber der bisherigen Verfahrensweise, bei der das Kunstharz in Wannen abgefüllt und zur Kühlung mit Wasser abgedeckt wird, läßt sich das erfindungsgemäße Verfahren in einem einzigen Arbeitsgang in einem Tauchbadfroster durchführen, den das aus dem Reaktor ausgepreßte Kunstharz auf einem Transportband durchläuft. Es ist vorteilhaft, hierzu das Kunstharz in Streifen auf das Transportband zu geben, da derartige Streifen schneller durchkühlen als geschlossene Schichten.

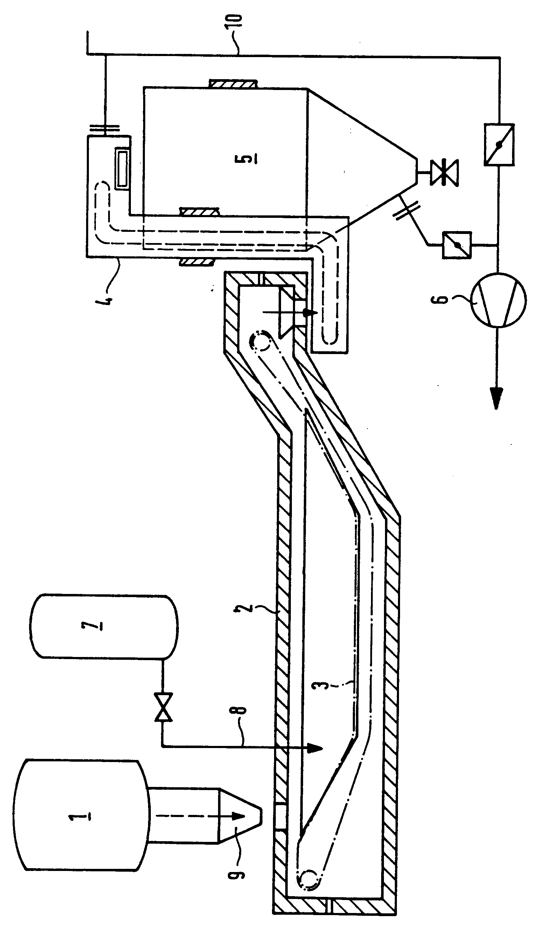

Ein Ausführungsbeispiel der Erfindung soll anhand der beigefügten Zeichnung erläutert werden. Sie zeigt die Seitenansicht einer Anlage zur Durchführung des erfindungsgemäßen Verfahrens in schematischer Form.

Die wichtigsten Teile der Anlage sind der Reaktor 1, der Tauchbadfroster 2 und der Pufferbehälter 5. Im Tauchbadfroster 2 befindet sich flüssiger Stickstoff als Kühlmedium, die Stickstoffzufuhr aus dem Speicher 7 ist durch einen Pfeil 8 angedeutet.

Das im Reaktor 1 hergestellte Kunstharz wird durch eine quergeteilte Schlitzdüse 9 auf ein Transportband 3 gegeben, welches den Tauchbadfroster 2 durchläuft. Durch die Querteilung der Schlitzdüse 9 ergeben sich einzelne Stränge, die sich schneller und intensiver kühlen lassen, als eine geschlossene Kunstharzschicht. Auf dem Transportband können Querstäbe oder andere querverlaufende Erhebungen angebracht sein, die den einzelnen Kunstharzsträngen Sollbruchstellen einprägen. Die Temperatur eines hochreaktiven Kunstharzes beträgt beispielsweise beim Austritt aus der quergeteilten Schlitzdüse 9 90°C. Eine Charge im Reaktor 1 hat ein Gewicht von ca. 2300 kg. Die Durchlaufzeit durch den Tauchbadfroster 2 beträgt etwa 30 sec. Die gesamte Auspreßzeit beträgt ca. 12 min bis zur Entleerung des Reaktors 1.

Nach Durchlaufen des Tauchbadfrosters 2 gelangt das Kunstharz bereits vorgebrochen mittels der Fördereinrichtung 4 in den Pufferbehälter 5. Der Pufferbehälter 5 wird vorher beim Füllen des Tauchbades von verdampftem kalten Stickstoffgas durchströmt, welches ebenfalls durch die Fördereinrichtung 4 in den Pufferbehälter 5 gelangt. Ein Tieftemperaturgebläse 6 zieht dabei über den Pufferbehälter 5 das Stickstoffgas ab. Nach Beendigung des Füllvorganges und mit Beginn des Auspressens wird die Bypaß-Leitung 10 am Pufferbehälter 5 geöffnet, so daß jetzt nicht mehr über den Pufferbehälter 5 abgezogen wird. In dem isolierten Pufferbehälter 5 erfolgt ein Temperaturausgleich, die Endtemperatur des vorgebrochenen Kunstharzes beträgt etwa 30° C. Das Kunstharz ist dann hart und spröde und wird für die weitere Verarbeitung zerkleinert.

Die kurze Zeit bis zum Aushärten bei 140°C, die B-Zeit, wird bei nach dem erfindungsgemäßen Verfahren hergestellten Kunstharzen sehr vereinheitlicht.Die Streuung der B-Zeit über eine gesamte Charge beträgt weniger als 1 Min. Dagegen beträgt die Streuung bei nach dem bisherigen Verfahren hergestellten Kunstharzen 2 Min. und mehr.

Von Vorteil ist es ferner, daß das Kunstharz nicht mehr getrocknet werden muß und die gesamte Weiterverarbeitung bis hin zum gemahlenen und abgepackten Produkt unmittelbar an die Kühlung angeschlossen und in eine Fertigungslinie integriert werden kann.

## Patentansprüche

1. Verfahren zur Vereinheitlichung der Streuung der B-Zeit von Duroplasten, die diskontinuierlich in einem Reaktor (1) hergestellt, aus diesem ausgepreßt und durch ein Kühlmittel bis zur Erstarrung abgekühlt werden, wonach sie gebrochen und gemahlen werden,
dadurch gekennzeichnet,
daß die Abkühlung mit einem tiefsiedenden verflüssigten Gas durchgeführt wird.

2. Verfahren nach Anspruch 1,
dadurch gekennzeichnet,
daß die Abkühlung mit flüssigem Stickstoff durchgeführt wird.

3. Verfahren nach Anspruch 1 oder 2,
dadurch gekennzeichnet,
daß das ausgepreßte Kunstharz auf einem Transportband (3) durch einen mit dem kryogenen Kühlmittel gefüllten Tauchbadfroster (2) geleitet wird.

4. Verfahren nach Anspruch 3,
dadurch gekennzeichnet,
daß das Kunstharz in Streifen auf das Transportband (3) aufgegeben wird, indem es durch eine quergeteilte verstellbare Schlitzdüse (9) ausgepreßt wird.

5. Verfahren nach Anspruch 4,
dadurch gekennzeichnet,
daß das Kunstharz auf einem Transportband (3) mit querverlaufenden Erhebungen zwecks Einprägung von Sollbruchstellen gefördert wird.

6. Verfahren nach einem der Ansprüche 1 bis 5,
dadurch gekennzeichnet,
daß das abgekühlte und gebrochene Kunstharz zwecks Durchführung eines Wärmeausgleichs in einem isolierten Pufferbehälter (5) zwischengespeichert wird.

7. Verfahren nach Anspruch 6,
dadurch gekennzeichnet,
daß der Pufferbehälter (5) beim Füllen des Tauchbadfrosters (2) von verdampftem Kühlmittel durchströmt und vorgekühlt wird.

## Claims

1. Process for standardising the variation of the B-stage time of thermosets which are prepared batchwise in a reactor (1), forced out of this and cooled until solidification by a coolant, after which they are broken and ground, characterised in that the cooling is carried out with a low-boiling liquefied gas.

2. Process according to Claim 1, characterised in that the cooling is carried out with liquid nitrogen.

3. Process according to Claim 1 or 2, characterised in that the forced-out synthetic resin is carried on a conveyor belt (3) through a direct-immersion freezer bath (2) filled with the cryogenic coolant.

4. Process according to Claim 3, characterised in that the synthetic resin is applied in strips onto the conveyor belt (3) by forcing it out of a transversely divided, adjustable sheet die (9).

5. Process according to Claim 4, characterised in that the synthetic resin is transported on a conveyor belt (3) having transversely extending elevations in order to impress predetermined breaking points.

6. Process according to one of Clams 1 to 5, characterised in that the cooled and broken synthetic resin is stored intermediately in an insulated buffer container (5) in order to carry out a thermal equalisation.

7. Process according to Claim 6, characterised in that evaporated coolant flows through and precools the buffer container (5) during filling of the direct-immersion freezer bath (2).

## Revendications

1. Procédé d'homogénéisation de la dispersion du temps B de matières thermodurcissables fabriquées de manière discontinue dans un réacteur (1), pour être exprimées de ce réacteur et être refroidies par un agent de refroidissement jusqu'à ce que ces matières soient figées, puis elles sont cassées et broyées, procédé caractérisé en ce que le refroidissement se fait dans un gaz liquéfié, à très basse température d'ébullition.

2. Procédé selon la revendication 1, caractérisé en ce qu'on refroidit avec de l'azote liquide.

3. Procédé selon la revendication 1 ou 2, caractérisé en ce qu'on conduit la résine synthétique exprimée sur une bande transporteuse (3) à travers un dispositif de congélation à bain d'immersion (2), rempli d'un fluide cryogène.

4. Procédé selon la revendication 3, caractérisé en ce qu'on fournit la résine synthétique à la bande transporteuse (3) sous forme de cordon en exprimant cette résine synthétique à travers une buse fendue (9), cloisonnée transversalement.

5. Procédé selon la revendication 4, caractérisé en ce que la résine synthétique est transportée sur une bande transporteuse (3) munie de bossages transversaux pour imprimer des zones de rupture de consigne.

6. Procédé selon l'une des revendications 1 à 5, caractérisé en ce que la résine synthétique refroidie et cassée, est stockée de façon intermédiaire dans un réservoir-tampon (5) pour réaliser un équilibrage de la température.

7. Procédé selon la revendication 6, caractérisé en ce que le réservoir-tampon (5) est balayé par le fluide de refroidissement vaporisé lors du remplissage du dispositif de congélation à bain d'immersion (2) et est refroidi préalablement.
